**Europäisches Patentamt**

**European Patent Office**

**Office européen des brevets**

(19)

(11) Veröffentlichungsnummer: **0 095 553**
**B1**

(12) ## EUROPÄISCHE PATENTSCHRIFT

(45) Veröffentlichungstag der Patentschrift:
19.03.86

(51) Int. Cl.⁴: **G 21 C 17/06**

(21) Anmeldenummer: 83100860.2

(22) Anmeldetag: 29.01.83

(54) Einrichtung zur Inspektion von Brennelementen insbesondere zum Detektieren defekter Brennstäbe aus kompletten Brennelementen wassergekühlter Kernreaktoren.

(30) Priorität: 27.05.82 DE 3219938

(43) Veröffentlichungstag der Anmeldung:
07.12.83 Patentblatt 83/49

(45) Bekanntmachung des Hinweises auf die Patenterteilung:
19.03.86 Patentblatt 86/12

(84) Benannte Vertragsstaaten:
BE CH DE FR IT LI SE

(56) Entgegenhaltungen:
EP - A - 0 063 681
FR - A - 2 298 859
FR - A - 2 341 183
GB - A - 881 449
US - A - 3 621 580

(73) Patentinhaber: BROWN BOVERI REAKTOR GmbH,
Dudenstrasse 44, D-6800 Mannheim 1 (DE)

(72) Erfinder: Scharpenberg, Rainer, Ing.grad., Im
Krappenklingen 32, D-6948 Waldmichelbach (DE)
Erfinder: Bäro, Günter, Dipl.-Phys.Dr., Weinberg
Strasse 32, D-6940 Weinheim (DE)

(74) Vertreter: Dahlmann, Gerhard, Dipl.-Ing. et al, c/o Brown
Boveri & Cie., AG Zentralbereich ZPT/P Postfach 351,
D-6800 Mannheim (DE)

## Beschreibung

Die Erfindung betrifft eine Einrichtung zur Inspektion von Brennelementen insbesondere zum Detektieren defekter Brennstäbe aus einem kompletten Brennelement wassergekühlter Kernreaktoren, wobei das Brennelement in vertikaler Erstreckung in einer Wasservorlage angeordnet ist und ein mit mehreren Fingern bestückter Träger über eine ebenfalls in der Wasservorlage befindliche Führungseinrichtung von der Seite her an das Brennelement herangeführt wird und wobei die von den Fingern getragenen Meßsonden in die Räume zwischen den Hüllrohren der Brennstäbe einführbar sind.

Eine derartige Einrichtung ist aus der DE-A-26 05 962 bekannt. Dort ist die Führungseinrichtung für den die Finger tragenden Träger am Mast der Brennelementwechselmaschine angeordnet. Bei der Manipulierung innerhalb der Wasservorlage ergeben sich daraus Schwierigkeiten beim positionsgenauen Einfahren der Finger in die Zwischenräume. Die Finger sind außerdem starr mit dem Träger verbunden, so daß bei fehlerhafter Positionierung eine Beschädigung der Finger und der daran befestigten Meßsonden wie z.B. Ultraschallschwinger nicht auszuschließen ist. Verschiedentlich treten beim Betrieb des Kernreaktors an einzelnen Stäben Verbiegungen auf, durch die der Zwischenraum zwischen zwei Stäben derart verengt ist, daß das EinfahTen eines Fingers nicht möglich ist. Eine starre Anordnung der Finger bewirkt dann, daß wegen eines einzigen verbogenen Stabes auch kein anderer Stab der entsprechenden Reihe prüfbar ist.

Es ist daher die Aufgabe der Erfindung eine Einrichtung der eingangs genannten Art anzugeben, mit deren Hilfe ein exaktes Positionieren der Prüfeinrichtung möglich ist, eine Beschädigung der Finger ausgeschlossen ist und bei Blockierung eines Fingers die Funktion der restlichen Finger erhalten bleibt.

Gelöst wird diese Aufgabe erfindungsgemäß dadurch, daß die Führungseinrichtung und ein Aufnahmeteil zur Festlegung des Brennelementfußes innerhalb der Wasservorlage positionsgenau zueinander angeordnet sind und daß jeder Finger nach dem Anstoßen an ein Hindernis relativ zu seiner Einführrichtung bewegbar ist.

Mit dieser Einrichtung wird auf einfache Weise die Beschädigung von Fingern sowie der Ausfall aller Finger bei Störung einer einzigen Fingerbewegung verhindert.

Dabei sind die Fürungseinrichtung und das Aufnahmeteil vorzugsweise auf einer gemeinsamen Grundplatte befestigt.

Gemäß einer weiterer Ausgestaltung ist das Aufnahmeteil ein Drehteller, der in verschiedenen Positionen arretierbar ist. Damit wird sichergestellt, daß bei redundanten Prüfvorgängen von verschiedenen Seiten des Brennelements aus ebenfalls eine exakte Positionierung möglich ist.

Zur Gewährleistung der relativen Bewegbarkeit der Finger ist nach einer bevorzugten Ausbildung vorgesehen, daß jeweils ein Finger im Bereich einer abgesetzten Bohrung den Träger durchdringt, daß zwischen dem Boden der abgesetzten Bohrung und einem mit dem Finger verbundenen Anschlag eine den Finger umfassende Druckfeder eingespannt ist und daß jedem Finger an seinem dem Ultraschwinger abgewandten Ende eine an der Rückseite des Trägers anlegbare Stellmutter zugeordnet ist.

Eine andere Ausbildung der Halterung des Fingers in dem Träger sieht vor, daß der Träger eine Durchführung rechteckförmigen Querschnitts aufweist, daß in einer Breitseite dieser Durchführung Aussparungen zur Aufnahme einer Druckfeder und einer Kugel und diesen Aussparungen gegenüberliegend in der anderen Breitseite weitere Aussparungen zur Aufnahme einer Kugel angebracht sind, daß die Kugeln mit einem Teil ihrer Peripherie in die Durchführung ragen und zur Halterung eines Fingers beitragen, daß der Finger einen an die Rückseite des Trägers anliegenden Anschlag und nach der Breitseite gerichtete Höcker aufweist und daß die Kugeln nach Überwindung der Kraft der Druckfedern durch die Höcker eine Bewegung des Fingers relativ zu Seiner Einführrichtung freigibt.

Dabei greift an dem der Meßsonde abgewandten Fingerende ein Hebel zur Betätigung eines Schalters zur Anzeige einer relativen Fingerbewegung an.

Vorzugsweise besteht die Fürungseinrichtung aus Schienen, die an der Grundplatte befestigt sind.

Weiterhin sind zwischen dem Aufnahmeteil und der Führungseinrichtung Mittel zur Unterstützung der Finger angeordnet.

Eine andere Ausbildung sieht vor, daß zwei gegeneinander um 90° versetzt angeordnete Träger vorgesehen sind, wobei die Finger eines Trägers gegenüber den Fingern des anderen Trägers derart höhenversetzt sind, daß eine gleichzeitige Prüfung des Brennelements von zwei Seiten möglich ist. Diese alternstive Ausbildung kann anstelle der Ausführung mit Drehteller treten.

Anhand eines Ausführungsbeispiels und der Figuren 1 bis 6 wird die Einrichtung beschrieben. Dabei zeigen

Fig. 1 eine Aufsicht der Einrichtung,

Fig. 2 eine Ansicht in Pfeilrichtung II,

Fig. 3 eine andere Ausbildung der Einrichtung,

Fig. 4 ein Schnitt entlang der Linie IV-IV der Fig. 1,

Fig. 5 eine in einem größeren Maßstab ausgeführte Schnittdarstellung des Trägers im Bereich eines Fingers,

Fig. 6 einen Finger in einer Ansicht in Pfeilrichtung VI der Fig. 5,

Fig. 7 eine andere Ausbildung des Trägers im Bereich eines Fingers und

Fig. 8 einen Finger in Pfeilrichtung VIII der Fig. 7.

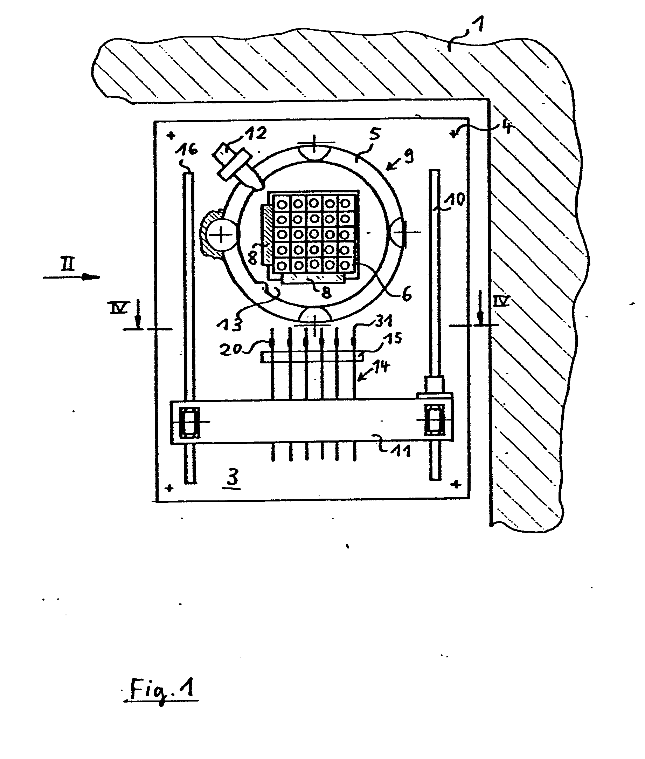

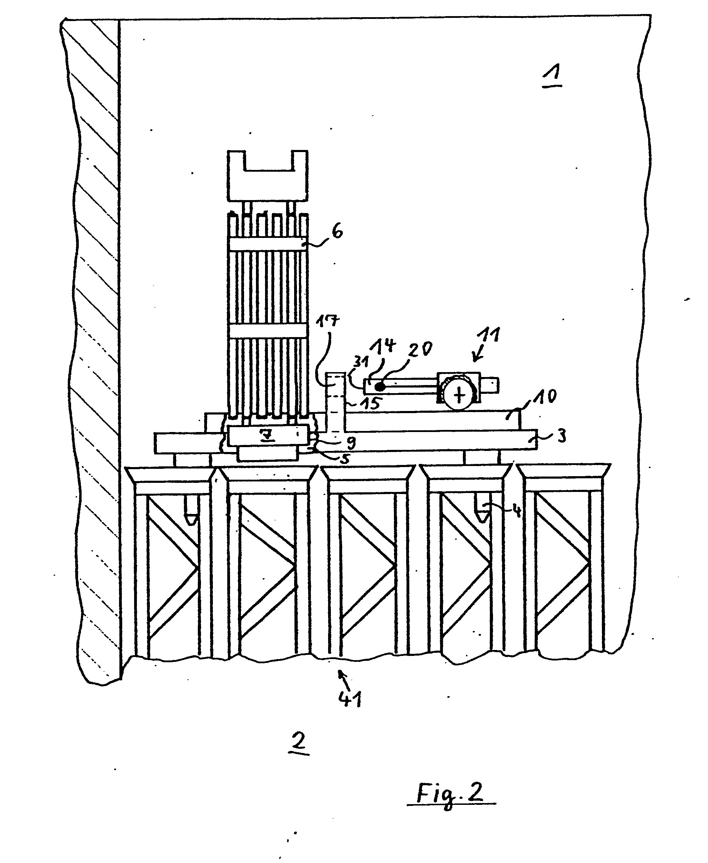

Die Fig. 1 und 2 zeigen als Wasservorlage ein Brennelementlagerbecken 1 an dessen Boden 2 ein Brennelementlagergestell 41 angeordnet ist. Eine Grundplatte 3 ist über Bolzen 4 im Lagergestell 41 gehalten. Ein als Drehteller ausgebildetes Aufnahmeteil 5 zur Festlegung eines Brennelementes 6 über seinen Fuß 7 ist in der Grundplatte gelagert. Der Fuß des Brennelementes wird über zwei Spannelemente 8 in eine durch eine Aussparung 9 im Aufnahmeteil 5 vorbestimmte Position gebracht, so daß das jeweils zu prüfende Brennelement gegenüber den ebenfalls auf der Grundplatte befestigten Schienen 10 zur Führung des Trägers 11 die gewünschte Prüfposition einnimmt. Eine Arretiervorrichtung 12 erlaubt das Verstellen des Drehtellers 13 um 90°, so daß aus Redundanzgründen alle Brennstäbe eines Brennelements 6 von einer um 90° versetzten Richtung aus noch einmal beschallt werden können.

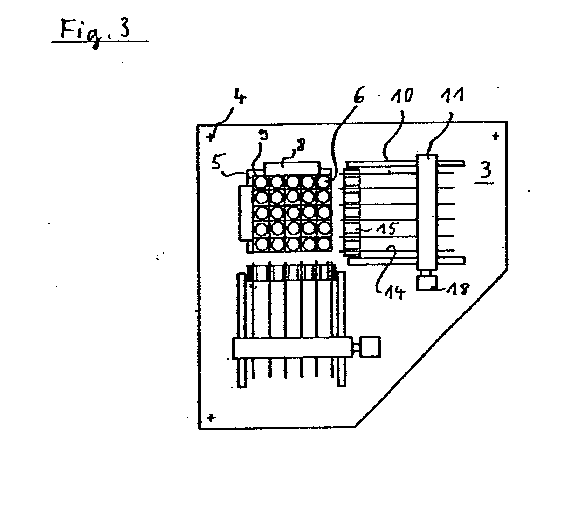

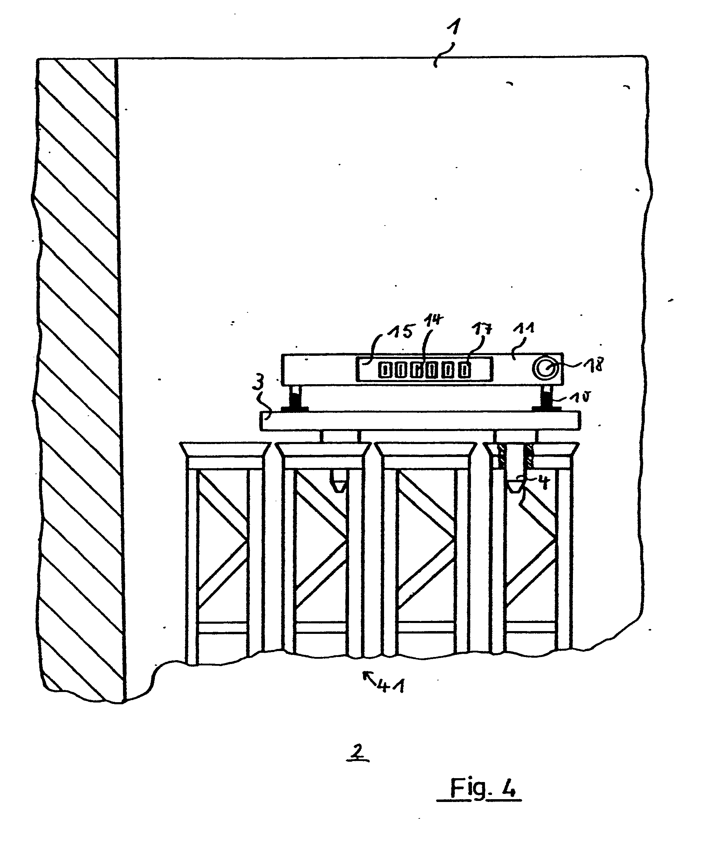

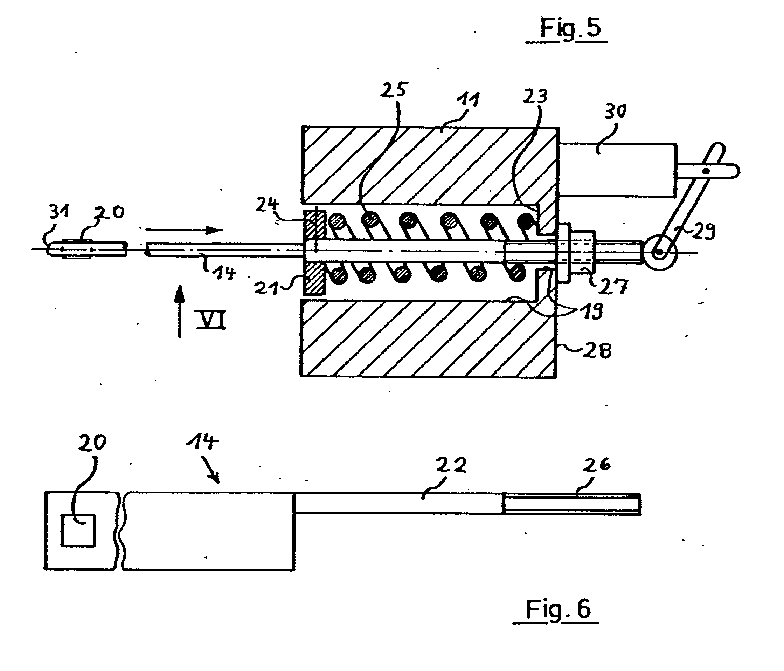

Eine Alternative zu der Drehtellerausbildung ist in der Fig. 3 zu erkennen. Dabei ist das Aufnahmeteil 5 für den Brennelement-fuß 7 stationär auf der Grundplatte 3 befestigt. Über Spannelemente wird der Brennelementfuß und damit das Brennelement in der durch die Aussparung 9 des Aufnahmeteils 5 gegebene Fosition gehalten. Zwei die Finger 14 tragende Träger 11 sind um 90° gegeneinander versetzt angeordnet. Die Hüllrohre eines Brennelements können somit zur Erhöhung des Prüfergebnisses ohne Drehung um 90° von zwei Seiten geprüft werden. Um die Prüfung von zwei Seiten gleichzeitig vornehmen zu können, sind die Finger des einen Trägers gegenüber den Fingern des anderen Trägers derart höhenversetzt zueinander angeordnet, daß sich die Finger der verschiedenen Träger gegenseitig nicht behindern. Der Träger 11 ist zusammen mit den Fingern 14 entlang der Schienen 10 bewegbar. Ein Führungskamm 15 ist zwischen dem Aufnahmeteil 5 und dem Ende 16 der Schienen 10 auf der Grundplatte befestigt. Er weist Öffnungen 17 auf, in denen jeweils ein Finger 14 an wenigstens zwei gegenüberliegenden Seiten unterstützend geführt ist. (Fig. 4) Wegaufnehmer 18 geben Aufschluß über die Position des Trägers während seiner Bewegung entlang der Schienen. Wie aus der Fig. 5 zu erkennen ist, durchsetzt jeweils ein Finger 14 den Träger 11 im Bereich einer abgesetzten Bohrung 19. Der Finger (Fig. 6) ist bis zur Höhe des Anschlages 21 als Rundstange 22 ausgeführt, die an ihrem freien Ende mit einem Gewinde 26 zur Aufnahme einer Stellmutter 27 versehen ist. Der Fingerteil zwischen dem Anschlag 21 und dem Ende 51 das Fingers weist einen rechteckförmigen Querschnitt von ca. 20 x 1 mm auf. Zwischen dem Boden 23 der abgesetzten Bohrung 19 und dem über einen Stift 24 mit der Rundstange 22 verbundenen Anschlag 21 ist eine Druckfeder 25 eingespannt, so daß eine Bewegung des Fingers relativ zur Bewegung des Trägers 11 möglich ist. An dem die Stellmutter 27 tragenden Fingerende greift ein Hebel 29 zur Betätigung eines Schalters 30 an, der die Relativbewegung des Fingers registriert.

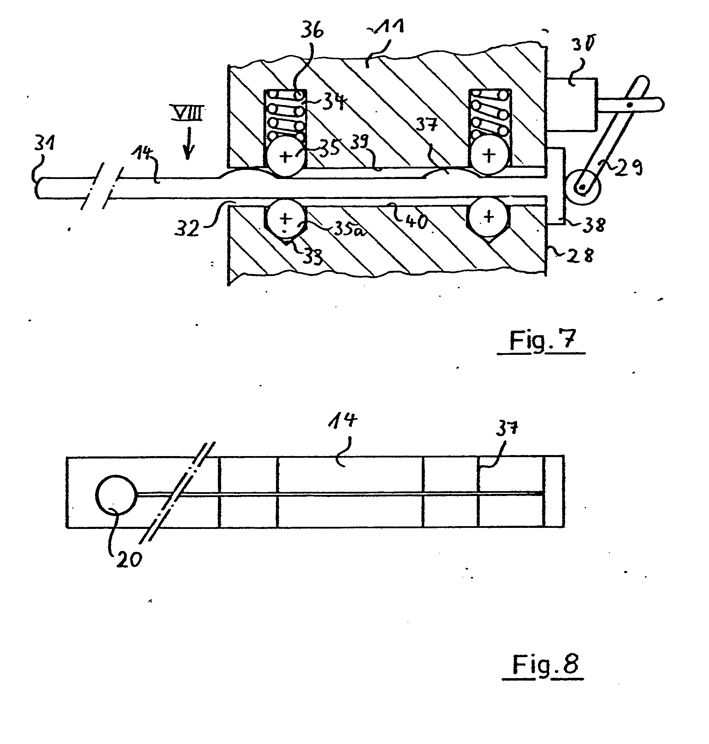

Die Fig. 7 und 8 zeigen eine andere Fingerausbildung und eine andere Art der Verbindung zwischen Finger 14 und Träger 11. Der Träger ist zur Aufnahme des Fingers mit einer Durchführung 32 rechteckförmigen Querschnitts versehen. Die gegenüberliegenden Breitseiten (39,40) der Durchführung sind mit Aussparungen 33, 34 zur Aufnahme einer Kugel 35a bzw. einer Kugel 35 und einer Druckfeder 36 versehen. Dabei liegt eine mit einer Kugel versehene Aussparung jeweils gegenüber einer mit Kugel und Druckfeder versehenen Aussparung. Der in der Durchführung 32 gehaltene Finger weist einen im wesentlichen rechteckförmigen Querschnitt auf. Er besitzt lediglich zwei mit einer abgerundetan Oberfläche versehene Höcker 37 und einen an der Rückseite 28 das Trägers 11 anliegenden Anachlag 38. Die Kraft der Druckfedern 36 ist so gewählt, daß bei ungestörtem Prüfablauf der Finger in der in Fig. 7 gezeigten Stellung verbleibt. Stößt aber der Finger 14 mit seinem Ende 31 gegen ein Hindernis, so werden über die Höcker 37 und die Kugeln 35 die Druckfedern zuaammengedrückt. Eine für die Prüfeinrichtung ungefährliche Relativbewegung kann erfolgen und wird über den Hebel 29 und den Schalter 30 registriert.

**Bezugszeichen**

1 Brennelementlagerbecken
2,23 Boden
3 Grundplatte
4 Bolzen
5 Aufnahmeteil
6 Brennelement
7 Fuß
8 Spannelement
9 Aussparung
10 Schiene
11 Träger
12 Arretiervorrichtung
13 Drehteller
14 Finger
15 Führungskamm
16 Ende der Schiene
17 Öffnungen
18 Wegaufnehmer
19 abgesetzte Bohrung
20 Meßsonde
21 Anschlag
22 Rundstange
24 Stift
25,36 Druckfeder
26 Gewinde
27 Stellmutter
28 RÜckseite
29 Hebel
30 Schalter
31 Ende des Fingers
32 Durchführung
33,34 Aussparung

35,35a Kugel
37 Höcker
38 Anschlag
39,40 Breitseite
41 Brennelementlagergestell

**Patentansprüche:**

1. Einrichtung zur Inspektion von Brennelementen insbesondere zum Detektieren defekter Brennstäbe aus einem kompletten Brennelement wassergekühlter Kernreaktoren, wobei das Brennelement (6) in vertikaler Erstreckung in einer Wasservorlage angeordnet ist und ein mit mehreren Fingern (14) bestückter Träger (11) über eine ebenfalls in der Wasservorlage befindliche Führungseinrichtung von der Seite her an das Brennelement herangeführt wird und wobei von den Fingern getragene Meßsonden (20) in die Räume zwischen den Hüllrohren der Brennstäbe einführbar sind, dadurch gekennzeichnet, daß dis Führungaeinrichtung und ein Aufnahmeteil (5) zur Festlegung des Brennelementfußes (7) innerhalb der Wasservorlage positionsgenau zueinander angeordnet sind und daß jeder Finger (14) nach dem Anstoßen an ein Hindernis relativ zu seiner Einführrichtung bewegbar ist.

2. Einrichtung nach Anspruch 1, dadurch gekennzeichnet, daß die Führungseinrichtung und das Aufnahmeteil (5) auf einer gemeinsamen Grundplatte (3) befestigt sind.

3. Einrichtung nach Anspruch 1 oder 2, dadurch gekennzeichnet, daß der Aufnahmeteil (5) ein Drehteller ist, der in verschiedenen Positionen arretierbar ist.

4. Einrichtung nach Anspruch 1, dadurch gekennzeichnet, daß jeweils ein Finger (14) im Bereich einer abgesetzten Bohrung (19) den Träger (11) durchdringt, daß zwischen dem Boden (23) der abgsestzten Bohrung und einem mit dem Finger ver-5. bundenen Anschlag (21) eine den Finger umfassende Druckfeder (25) eingespannt ist und daß jedem Finger (14) an seinem der Maßsonde abgewandten Ende eine an der Rückseite (28) dea Trägers (11) anlagbare Stellmutter (27) zugeordnet ist.

5. Einrichtung nach Anspruch 1, dadurch gekennzeichnet, daß der Träger eine Durchführung (32) rechteckförmigen Querschnitts aufweist, daß in einer ersten Breitseite (39) dieser Durchführung Aussparungen (34) zur Aufnahme einer Druckfeder (36) und einer Kugel (35) und diesen Aussparungen gegenüberliegend in der anderen Breitseite (40) weitere Aussparungen (33) zur Aufnahme einer Kugel (35a) angebracht sind, daß die Kugeln (35,35a) mit einem Teil ihrer Peripherie in die Durchführung (32) ragen und zur Halterung eines Fingers (14) beitragen, daß der Finger einen an die Rückseite (28) des Trägers (11) anliegenden Anachlag (38) und nach der ersten Breitseite (39) gerichtete Höcker (37) aufweist und daß die Kugeln (35) nach Überwindung der Kraft der Druckfedern (36) durch die Höcker (37) eine Bewegung des Fingers (14) relativ zu seiner Einführrichtung freigibt.

6. Einrichtung nach Anspruch 4 oder 5, dadurch gekennzeichnet, daß an dem der Meßsonde (20) abgewandten Fingerende ein Hebel (29) zur Betätigung eines Schalters (30) zur Anzeige einer relativen Fingerbewegung angreift.

7. Einrichtung nach Anspruch 1, dadurch gekennzeichnet, daß die Führungseinrichtung aua Schienen (10) besteht die an der Grundplatte (3) befestigt sind.

8. Einrichtung nach Anspruch 1, dadurch gekennzeichnet, daß zwiechen dem Aufnahmeteil (5) und der Führungseinrichtung Mittel (15) zur Unterstützung der Finger (14) angeordnet sind.

9. Einrichtung nach Anspruch 1, dadurch gekennzeichnet, daß zwei gegeneinander um 90° versetzt angeordnete Träger (11) vorgesehen sind, wobei die Finger (14) sines Trägere gegenüber den Fingern des anderen Trägers derart höhenversetzt sind, daß eine gleichzeitige Prüfung des Brennelements (6) von zwai Seiten möglich ist.

**Claims:**

1. Device for the inspection of fuel elements, in particular for detecting defective fuel rods from a complete fuel element of water-cooled nuclear reactors, with the fuel element (6) being arranged in vertical extension in a water receiver and a bearer (11) fitted with several fingers (14) being brought up to the fuel element from the side by a guide device likewise located in the water receiver and with measuring probes (20) supported by the fingers being insertable into the spaces between the encasing tubes of the fuel rods, characterised in that the guide device and an accommodation part (5) are arranged relative to one another in a precise position inside the water receiver in order to fix the fuel element base (7) and that each finger (14) can be moved relative to its insertion direction after butting against an obstacle.

2. Device according to Claim 1, characterised in that the guide device and the accommodation part (5) are fastened to a common baseplate (3).

3. Device according to Claim 1 or 2, characterised in that the accommodation part (5) is a turntable which can be locked in various positions.

4. Device according to Claim 1, characterised in that one finger (14) in each case penetrates through the bearer (11) in the area of a stepped bore (19), that a compression spring (25) enclosing the finger is mounted between the base (23) of the stepped bore and a stop (21) connected to the finger and that an adjusting nut (27) which can be placed against the rear (28) of the bearer (11) is allocated to each finger (14) at its end facing away from the measuring probe.

5. Device according to Claim 1, characterised in that the bearer has a passage (32) of rectangular cross-section, that recesses (34) for accommodating a compression spring (36) and a ball (35) are made in a first wide side (39) of this passage and further recesses (33) are made in the other wide side (40) opposite these recesses (34) for accommodating a ball (35a), that the balls (35, 35a), with a part of their periphery, project into the passage (32) and contribute to the retention of a finger (14), that the finger has a stop (38) sitting against the rear (28) of the bearer (11) and protuberances (37) directed towards the first wide side (39) and that the balls (35), after overcoming the force of the compression springs (36), because of the protuberances (37), release a movement of the finger (14) relative to the insertion direction of the finger (14).

6. Device according to Claim 4 or 5, characterised in that a lever (29) for actuating a switch (30) for indicating a relative finger movement engages on the finger end facing away from the measuring probe (20).

7. Device according to Claim 1, characterised in that the guide device consists of rails (10) which are fixed to the baseplate (3).

8. Device according to Claim 1, characterised in that means (15) for supporting the fingers (14) are arranged between the accommodation part (5) and the guide device.

9. Device according to Claim 1, characterised in that two bearers (11) are arranged which are displaced relative to one another through 90°, with the fingers (14) of one bearer being vertically displaced relative to the fingers of the other bearer in such a way that simultaneous checking of the fuel element (6) is possible from two sides.

## Revendications

1. Dispositif d'inspection d'éléments combustibles, notamment pour la détection de barreaux de combustible défectueux dans un élément combustible complet de réacteurs nucléaires refroidis à l'eau, l'élément combustible (6) étant disposé en position verticale dans une capacité d'eau, un support (11) muni de plusieurs doigts (14) étant approché latéralement de l'élément combustible sur un dispositif de guidage également placé dans la capacité d'eau et des sondes de mesure (20) portées par les doigts étant introductibles dans les intervalles entre les gaines des barreaux de combustible, dispositif caractérisé par le fait que le dispositif de guidage et une partie de logement (5) destinée à fixer le pied (7) de l'élément combustible sont placés en des positions mutuelles exactes à l'intérieur de la capacité d'eau et qu'aprés avoir heurté un obstacle, chaque doigt (14) est déplaçable par rapport à sa direction d'introduction.

2. Dispositif selon la revendication 1 caractérisé par le fait que le dispositif de guidage et la partie de logement (5) sont fixés sur une-plaque de base (3) commune.

3. Dispositif selon la revendication 1 ou 2, caractérisé par le fait que la partie de logement (5) est un plateau tournant blocable dans différentes positions.

4. Dispositif selon la revendication 1 caractérisé par le fait que chaque doigt (14) traverse le support (11) dans la région d'un alésage étagé (19), qu'un ressort de compression (25) entourant le doigt est encastré entre le fond (23) dudit alésage étagé et une butée (21) reliée au doigt et qu'à chaque doigt (14) est associé, sur son extrémité éloignée de la sonde de mesure, un écrou de réglage (27) applicable contre la face arriere (28) du support (11).

5. Dispositif selon la revendication 1 caractérisé par le fait que le support présente un conduit traversant (32) de section rectangulaire, que sont ménagés dans un premier côté large (39) de ce conduit des évidements (34) pour accueillir un ressort de compression (36) et une bille (35), et dans l'autre côté large (40) d'autres évidements (33) pour une bille (35a), que les billes (35, 35a) sont en saillie par une partie de leur périphérie dans le conduit traversant (32) et contribuent au maintien d'un doigt (14), que le doigt comporte une butée (38) en appui contre la face arriere (28) du support (11) et des bossages (37) dirigés vers le premier côté large (39) et que, une fois la force des ressorts de compression (36) surmontée par les bossages 37, les billes (35) autorisent un déplacement du doigt (14) par rapport à sa direction d'introduction.

6. Dispositif selon la revendication 4 ou 5 caractérisé par le fait qu'un levier (29) attaque l'extrémité du doigt éloignée de la sonde de mesure (20) pour actionner un commutateur (30) destiné à indiquer un déplacement relatif du doigt.

7. Dispositif selon la revendication 1 caractérisé par le fait que le dispositif de guidage se compose de rails (10) qui sont fixés à la plaque de base (3).

8. Dispositif selon la revendication 1 caractérisé par le fait que des moyens de sustentation (15) des doigts (14) sont placés entre la partie de logement (5) et le dispositif de guidage.

9. Dispositif selon la revendication 1 caractérisé par le fait qu'il comporte deux supports (11) décalés de 90° l'un par rapport à l'autre, les doigts (14) de l'un étant décalés en hauteur par rapport aux doigts de l'autre de façon à permettre un contrôle simultané de l'élément combustible (6) à partir de deux côtés.

Fig. 1

Fig. 2

Fig. 3

Fig. 4

Fig. 5

Fig. 6

Fig. 7

Fig. 8